# EUROPÄISCHE PATENTSCHRIFT

(11) **EP 0 764 521 B1**
(45) Veröffentlichungstag und Bekanntmachung des Hinweises auf die Patenterteilung: **22.01.2003**
(21) Anmeldenummer: 96113982.1
(22) Anmeldetag: 31.08.1996
(51) Int. Cl.: B32B 31/28

(54) **Verfahren zur Herstellung einer Verbundbahn aus einer Nonwoven-Vliesbahn und einer einseitigen Beschichtung aus einer Kunststoff-Folie**
Method for producing a laminate made of a nonwoven web coated on one face with plastic film
Procédé de fabrication d'un laminé composé de matière non-tissée revetue, sur une face, d'une feuille de matière plastique

(30) Priorität: 19.09.1995 DE 19534702
(43) Veröffentlichungstag der Anmeldung: 26.03.1997
(73) Patentinhaber: Reifenhäuser GmbH & Co. Maschinenfabrik, 53844 Troisdorf (DE)
(72) Erfinder: Kunze, Bernd, Dr., 53773 Hennef (DE); Ott, Hans Dieter, 53757 Sankt Augustin (DE)
(74) Vertreter: Honke, Manfred, Dr.-Ing.

(56) Entgegenhaltungen:
- EP-A- 0 437 849
- DE-A- 4 016 348
- FR-A- 2 220 380
- FR-A- 2 263 092
- US-A- 3 196 063
- US-A- 3 823 061

## Beschreibung

Die Erfindung betrifft ein Verfahren zur Herstellung einer Verbundbahn aus einer Nonwoven-Vliesbahn aus Kunststoff-Filamenten und/oder Kunststoff-Fasern aus thermoplastischem Kunststoff und einer einseitigen Beschichtung aus Kunststoff-Folie aus thermoplastischem Kunststoff im Durchlauf, wobei die Nonwoven-Vliesbahn dem Auflaufbereich einer Verbundwalze zugeführt wird, die entsprechend der Durchlaufgeschwindigkeit rotiert und zumindest die Breite der Nonwoven-Vliesbahn aufweist, wobei die Kunststoff-Folie mit Hilfe einer Breitschlitzdüse, deren Schlitzmund im Auflaufbereich der Verbundwalze angeordnet ist, aus einer Schmelze des thermoplastischen Kunststoffes erzeugt und im jungfräulichen, plastischen Zustand im Wesentlichen tangential mit der auf der Verbundwalze aufliegenden Nonwoven-Vliesbahn in Berührungskontakt gebracht wird und wobei die dadurch gebildete Verbundbahn auf der Verbundwalze und/oder danach abgekühlt wird. Die Nonwoven-Vliesbahn kann ein- oder mehrschichtig aufgebaut sein, sie kann insbesondere auch aus einer Schicht bestehen, die aus Kunststoff-Filamenten aufgebaut ist, und einer weiteren Schicht, die aus Kunststoff-Fasern aufgebaut ist. Mit anderen Worten kann es sich um eine einschichtige oder mehrschichtige Vliesbahn aus Spinnvlies und/oder aus Meltblown-Vlies handeln.

Verbundbahnen des eingangs beschriebenen Aufbaues und der eingangs beschriebenen Zweckbestimmung sind in verschiedenen Ausführungsformen bekannt. Zu ihrer Herstellung werden die Nonwoven-Vliesbahn und die Kunststoff-Folie als Bahn unter Anwendung von mechanischem Druck und Wärme vereinigt, entweder stoffschlüssig oder auch unter Zwischenschaltung eines Klebers. Zur Vereinigung wird z. B. mit entsprechenden Kalandern gearbeitet, die eine sogenannte Presseur-Einheit bilden. Das ist aufwendig und in Bezug auf den Verbund verbesserungsfähig.

Bei dem eingangs genannten Verfahren, von dem die Erfindung ausgeht (DE 40 16 348 A1) sind die Nonwoven-Vliesbahn und die Kunststoff-Folie im Auflaufbereich der Verbundwalze aufgrund deren Ausbildung als Unterdruckkammern einem Unterdruck ausgesetzt. Dabei wird dieser Unterdruck so gesteuert, dass die noch schmelzflüssige Kunststoff-Folie bei geringer Eindringtiefe nur auf die an der Oberfläche der Nonwoven-Vliesbahn liegenden Fasern aufgelegt wird. Diese bekannten Maßnahmen sind einerseits sehr aufwendig und andererseits in Bezug auf den beschriebenen Verbund verbesserungsfähig. Fernerhin ist ein Verfahren zur Herstellung eines beschichteten Papiers bekannt (US 3,196,063 A), das sich durch verbesserte Barriereeigenschaften auszeichnen soll. Bei diesem Verfahren werden ähnliche Maßnahmen angewendet, wie bei dem vorstehend beschriebenen aus dem Stand der Technik bekannten Verfahren.

Der Erfindung liegt das technische Problem zugrunde, ein Verfahren zur Herstellung einer Verbundbahn aus einer Nonwoven-Vliesbahn aus Kunststoff-Filamenten und/oder Kunststoff-Fasern aus thermoplastischem Kunststoff und einer einseitigen Beschichtung aus Kunststoff-Folie aus thermoplastischem Kunststoff anzugeben, bei dem mit relativ einfachen Mitteln ein wesentlich verbesserter Verbund erreicht wird.

Zur Lösung dieses technischen Problems ist Gegenstand der Erfindung ein Verfahren der eingangs genannten Art, welches dadurch gekennzeichnet ist, dass die Nonwoven-Vliesbahn vor der Zuführung zum Auflaufbereich der Verbundwalze auf eine Verbundtemperatur erwärmt wird, die beachtlich niedriger liegt, als die Schmelztemperatur des thermoplastifizierten Kunststoffes und die höher ist als die Umgebungstemperatur,
dass die Kunststoff-Folie in dem Bereich, in dem die im plastischen Zustand befindliche Kunststoff-Folie mit der Nonwoven-Vliesbahn in Berührungskontakt kommt mit Hilfe von zumindest einer Elektronen-Sprühelektrode, die sich quer zur Durchlaufrichtung erstreckt, elektrostatisch aufgeladen wird und
dass die Temperaturen, die Durchlaufgeschwindigkeit, die Extrusionsgeschwindigkeit der Kunststoff-Folie aus der Breitschlitzdüse und die elektrostatische Aufladung so gewählt werden, dass die Kunststoff-Folie im Bereich des Berührungskontaktes die Kunststoff-Filamente und/oder die Kunststoff-Fasern mit einem Umschlingungswinkel im Bereich von 90° bis 180° oder mehr umschlingt.

Im Rahmen der Erfindung wird von einer Kunststoff-Folienbahn gesprochen, weil diese sich letzten Endes ausbildet, obgleich der thermoplastifizierte Kunststoff beim Austreten aus der Breitschlitzdüse noch nicht zur Folie im klassischen Sinne erstarrt ist. Es tritt aus der Breitschlitzdüse eher eine in Bezug auf Breite und Dicke definierte bahnförmige Schmelzefahne aus, die sich auf der Nonwoven-Vliesbahn ablegt. Erfindungsgemäß wird mechanischer Druck zum Zwecke einer Vereinigung der Nonwoven-Vliesbahn und der Kunststoff-Folie nicht mehr benötigt. Überraschenderweise gelingt es, den Verbund mit Hilfe der elektrostatischen Kräfte herbeizuführen, die dadurch entstehen, dass in dem Bereich, in dem die im plastischen Zustand befindliche Kunststoff-Folie mit der Nonwoven-Vliesbahn in Berührungskontakt kommt, die Kunststoff-Folie mit Hilfe von zumindest einer Elektronen-Sprühelektrode, die sich quer zur Durchlaufrichtung erstreckt, elektrisch aufgeladen wird. Die elektrostatischen Kräfte sind erheblich. Das erfindungsgemäße Verfahren kann mit Nonwoven-Vliesbahnen durchgeführt werden, die nach Maßgabe der eingesetzten Werkstoffe unterschiedliche Temperatur aufweisen. Erfindungsgemäß wird der Verbundstation eine Nonwoven-Vliesbahn zugeführt, die auf eine werkstoffabhängige Verbundtemperatur vorgewärmt ist. Soll eine Verbundbahn des eingangs beschriebenen Aufbaues hergestellt werden, so können durch einige Versuche, die leicht auszuführen sind, die Temperaturen, insbes. die Verbundtemperatur, die Durchlaufgeschwindigkeit, die Extrusionsgeschwindigkeit der Kunststoff-Folie aus der Breitschlitzdüse und die elektrostatische Aufladung so gewählt werden, dass die Kunststoff-Folie im Bereich der Berührungskontakte die Kunststoff-Filamente und/oder die Kunststoff-Fasern mit einem Umschlingungswinkel im Bereich von 90° und sogar mehr umschlingt. Im Übrigen entsteht in diesem Umschlingungsbereich eine ausreichend stoffschlüssige Verbindung, so dass über diesen Formschluss und den Stoffschluss der Verbund beachtlich verbessert wird. Die Erfindung arbeitet beim Verbund gleichsam mit einer elektrostatisch erzeugten Flächenpressung. Mit dieser gelingt es überraschenderweise, den beschriebenen Formschluss bei gleichzeitig auch ausreichend stoffschlüssiger Verbindung herzustellen. Die aus der Breitschlitzdüse austretende Schmelzefahne ist so weit aktiviert, dass die beschriebene formschlussbildende Umschlingung durch elektrostatische Kräfte bei gleichzeitiger Ausbildung eines Stoffschlusses stattfindet.

Elektronen-Sprühelektroden sind in verschiedenen Ausführungsformen bekannt und im Rahmen der Erfindung einsetzbar. Sie werden in der technischen Praxis für die verschiedensten Zwecke verwendet, beispielsweise im Rahmen von Elektrofiltern und auch zur Herstellung von elektrostatischen Haftungskräften. Bisher ist nicht erkannt worden, dass bei Verwirklichung der Lehre der Erfindung ein intensiver formschlüssiger und stoffschlüssiger Verbund zwischen der Nonwoven-Vliesbahn und der Kunststoff-Folie erreicht werden kann. Besonders ausgeprägt sind die beschriebenen Effekte, wenn die Nonwoven-Vliesbahn ihrerseits zuvor eine biaxiale Verstreckung erfahren hat, beispielsweise mit einem Verstreckungsverhältnis 1:4, und wenn die Kunststoff-Filamente oder Kunststoff-Fasern bei der Vliesherstellung mit einer Unterziehung von 1:20 bis 1:30 erzeugt worden sind. Die Geschwindigkeit der Nonwoven-Vliesbahn einerseits und die Geschwindigkeit, mit der die Kunststoff-Folie aus der Breitschlitzdüse andererseits austritt, können mehr oder weniger gleich gewählt werden. Es besteht aber auch die Möglichkeit, die Kunststoff-Folie beim Auftreffen auf die Nonwoven-Vliesbahn gleichsam zu stauchen oder noch einmal einer Verstreckung zu unterwerfen.

Im Einzelnen bestehen im Rahmen der Erfindung mehrere Möglichkeiten der weiteren Ausbildung und Gestaltung des erfindungsgemäßen Verfahrens. Zweckmäßigerweise wird mit einer Kunststoff-Folie gearbeitet, wie sie im Patentanspruch 3 spezifiziert ist.

Es versteht sich, dass die betriebsmäßigen Parameter des erfindungsgemäßen Verfahrens dem herzustellenden Produkt und den eingesetzten Werkstoffen anzupassen ist. Bewährt hat es sich, mit einer Nonwoven-Vliesbahn mit einem Vliesgewicht von 15 bis 25 g/m², vorzugsweise etwa 17 g/m², und einer Kusntstoff-Folie mit einer Schmelzpunkttemperatur von 80 °C bis 160 °C, Foliendicke 12 bis 18 µm, vorzugsweise etwa 14 µm, zu arbeiten, wobei die Nonwoven-Vliesbahn auf eine Verbundtemperatur von etwa 60 °C erwärmt wird und die Verbundwalze auf einer Temperatur von etwa 50 °C gehalten wird, so dass sie auch einen Abkühlungseffekt bewirkt. Wird mit einer Nonwoven-Vliesbahn aus einem Polypropylen und mit einer Kunststoff-Folie aus einem Äthylen-Acrylsäureester Copolymer gearbeitet, so empfehlen sich die vorstehend angegebenen zahlenmäßigen Parameter insbesondere. - Grundsätzlich kann auch die Kunststoff-Folie aus einem der Werkstoffe "PP, LDPE, LLDPE und HDPE" oder Mischungen davon bestehen.

In Bezug auf die elektrostatische Aufladung der Kunststoff-Folie ist zu bemerken, dass diese ausreichend stark sein muss, damit eine ausreichend starke elektrostatische Flächenpressung erreicht wird. Vorteilhaft ist es, wenn die metallische oder mit einer metallischen Oberfläche versehene Verbundwalze geerdet wird. Man kann aber auch die metallische oder mit metallischer Oberfläche versehene Verbundwalze gegenüber der Elektronen-Sprühelektrode als Anode schalten. Bei einer anderen Ausführungsform des erfindungsgemäßen Verfahrens wird zumindest die Oberfläche der Verbundwalze aus einem dielektrischen Werkstoff hergestellt. Im Rahmen der Erfindung liegt es, zwischen der Elektronen-Sprühelektrode und der Kunststoff-Folienbahn zusätzlich eine weitere Nonwoven-Vliesbahn zuzuführen, die auf diese Weise mit der Verbundbahn zusätzlich zunächst in elektrostatischen Verbund gebracht wird und sich mit der Verbundbahn zusätzlich vereinigt. Insbesondere kann als zusätzliche Nonwoven-Vliesbahn eine Zellstoff-Vliesbahn zugeführt werden.

Die erreichten Vorteile sind darin zu sehen, daß im Rahmen des erfindungsgemäßen Verfahrens unter Verzicht auf eine mechanische Pressung, z. B. durch eine sogenannte Presseur-Einrichtung, nicht nur der Verbund zwischen der Nonwoven-Vliesbahn und der Kunststoff-Folie hergestellt, sondern sogar verbessert werden kann. Das ist von großer Bedeutung, weil es sich bei der Herstellung von solchen Verbundbahnen um die Herstellung von ausgesprochenen Massenprodukten handelt.

Im folgenden wird die Erfindung anhand einer lediglich ein Ausführungsbeispiel darstellenden Zeichnung ausführlicher erläutert. Es zeigen in schematischer Darstellung
- Fig. 1: ein Schema einer Anlage zur Durchführung des erfindungsgemäßen Verfahrens,
- Fig. 2: eine andere Ausführungsform des Gegenstandes nach Fig. 1,
- Fig. 3: eine nochmals andere Ausführungsform und
- Fig. 4: in starker Vergrößerung einen Ausschnitt aus einer erfindungsgemäß hergestellten Verbundbahn

In den Figuren ist eine Verbundstation dargestellt. Man erkennt zunächst eine Einrichtung 1, von der eine Nonwoven-Vliesbahn 2 abgezogen werden kann, und eine Kunststoff-Folie 3, die mit Hilfe einer Breitschlitzdüse 4 aus einer Schmelze des thermoplastifizierten Kunststoffes erzeugt wird. Man erkennt fernerhin zumindest eine Elektronen-Sprühelektrode 5, die sich quer zur Durchlaufrichtung erstreckt und dazu dient, die Kunststoff-Folie 3 elektrostatisch aufzuladen. Mit den eingetragenen Temperaturen erkennt man, daß die Nonwoven-Vliesbahn 2 auf eine Verbundtemperatur erwärmt wird, die beachtlich niedriger liegt als die Schmelztemperatur, die beispielsweise etwa 250 °C beträgt. Die auf Verbundtemperatur erwärmte Nonwoven-Vliesbahn 2 wird dem Auflaufbereich 6 einer Verbundwalze 7 zugeführt. Die Verbundwalze 7 rotiert entsprechend der Durchlaufgeschwindigkeit und weist zumindest die Breite der Nonwoven-Vliesbahn 2 auf. Die Rotation der Verbundwalze 7 wurde durch einen Bogenpfeil angedeutet. Im Ausführungsbeispiel wird die Nonwoven-Vliesbahn 2 von einem Coil abgezogen, über eine Temperierwalze 8 geführt und danach auf die Verbundwalze 7 aufgeleitet. Die Kunststoff-Folie 3 wird mit Hilfe der bereits erwähnten Breitschlitzdüse 4 aus einer Schmelze des thermoplastischen Kunststoffes erzeugt, wobei der Schlitzmund 9 der Breitschlitzdüse 4 im Auflaufbereich 6 der Verbundwalze 7 angeordnet ist. Die Kunststoff-Folie 3 wird im jungfräulichen, plastischen Zustand, im wesentlichen tangential mit der auf der Verbundwalze 7 aufliegenden Nonwoven-Vliesbahn 2 in Berührungskontakt gebracht. Die Kunststoff-Folie 3 hat hier noch den Charakter einer Schmelzefahne. In dem Bereich, in dem die im plastischen, schmelzefahnenähnlichen Zustand befindliche Kunststoff-Folie 3 mit der Nonwoven-Vliesbahn 2 in Berührungskontakt kommt, wird die Kunststoff-Folie 3 mit Hilfe von zumindest einer Elektronen-Sprühelektrode 5, die sich quer zur Durchlaufrichtung erstreckt, elektrostatisch aufgeladen. Die dadurch gebildete Verbundbahn 2, 3 mit elektrostatischem Verbund wird auf der Verbundwalze 7 und/oder danach abgekühlt. Im übrigen wird in bezug auf die erfindungsgemäßen Maßnahmen auf den allgemeinen Teil der Beschreibung verwiesen.

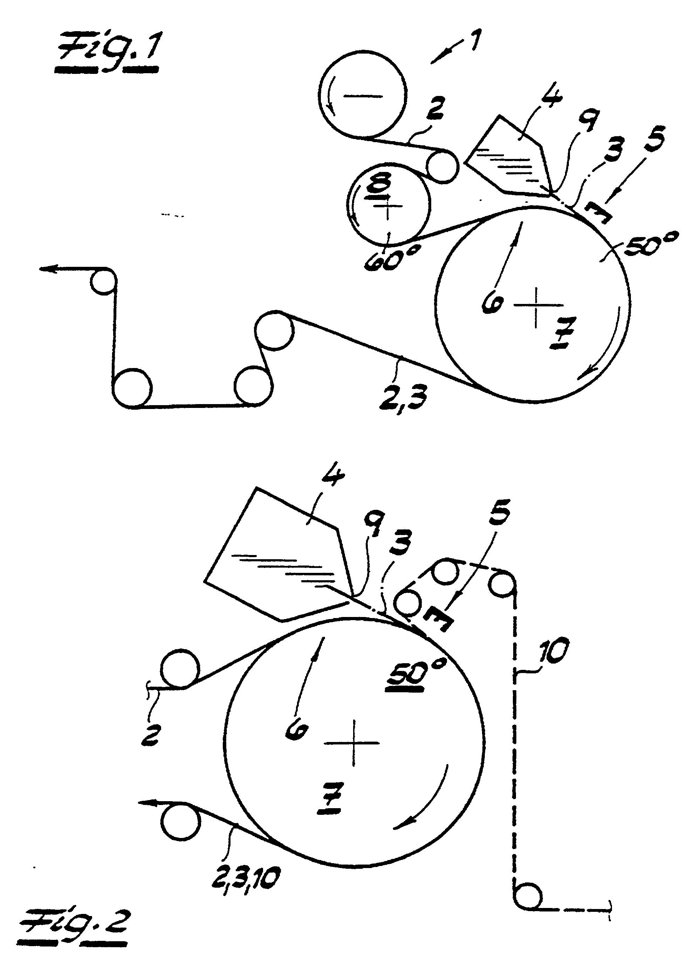

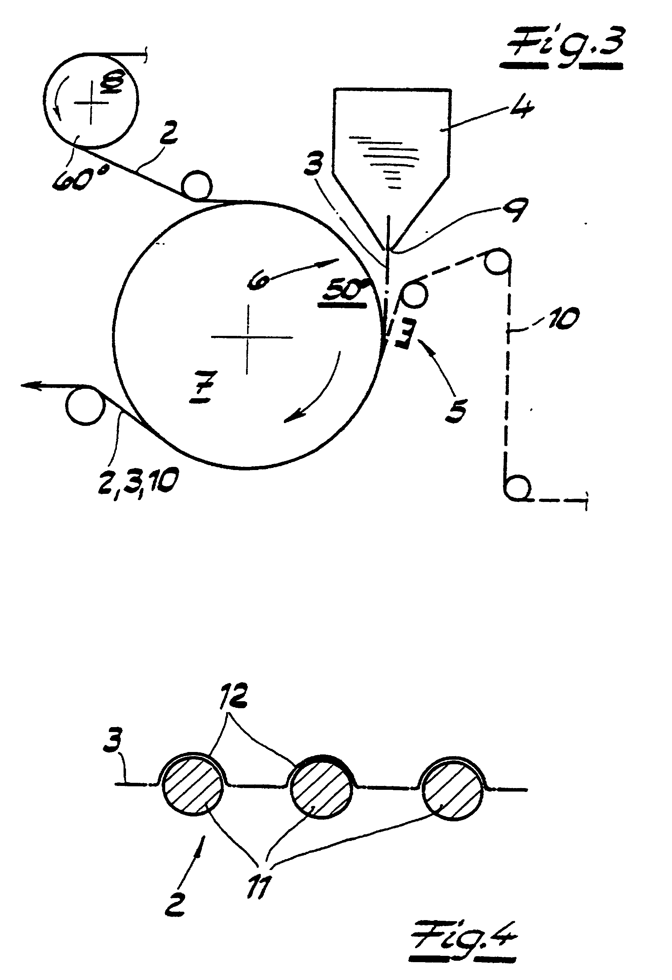

Die Fig. 2 und 3 sind mit den schon erläuterten Bezugszeichen ohne weiteres verständlich. Die Anordnung ist hier so getroffen, daß zwischen der Elektronen-Sprühelektrode 5 und der Kunststoff-Folienbahn 3 zusätzlich eine Nonwoven-Vliesbahn 10 zugeführt wird, die in der beschriebenen Art und Weise mit der Verbundbahn 2, 3 zusätzlich in elektrostatischen Verbund gebracht wird. Überraschenderweise ist auch dieser Verbund hohen Beanspruchungen gewachsen. Auf diese Weise kann als zusätzliche Nonwoven-Vliesbahn 10 auch eine Zellstoff-Vliesbahn aufgebracht werden.

In der Fig. 4 ist schematisch ein Ausschnitt aus einer erfindungsgemäß hergestellten Verbundbahn 2, 3 im Schnitt dargestellt. Drei Filamentfäden 11 wurden herausgezeichnet. Man erkennt, daß die Kunststoff-Folienbahn 3 Umschlingungsausformungen 12 gebildet hat, die die Filamentfäden 11 um etwa 90° bis 180° umschlingen.

## Patentansprüche

1. Verfahren zur Herstellung einer Verbundbahn aus einer Nonwoven-Vliesbahn aus Kunststoff-Filamenten und/oder Kunststoff-Fasern aus thermoplastischem Kunststoff und einer einseitigen Beschichtung aus Kunststoff-Folie aus thermoplastifiziertem Kunststoff im Durchlauf, wobei die Nonwoven-Vliesbahn dem Auflaufbereich einer Verbundwalze zugeführt wird, die entsprechend der Durchlaufgeschwindigkeit rotiert und zumindest die Breite der Nonwoven-Vliesbahn aufweist,
wobei die Kunststoff-Folie mit Hilfe einer Breitschlitzdüse, deren Schlitzmund im Auflaufbereich der Verbundwalze angeordnet ist, aus einer Schmelze des thermoplastischen Kunststoffes erzeugt und im jungfräulichen, plastischen Zustand im wesentlichen tangential mit der auf der Verbundwalze aufliegenden Nonwoven-Vliesbahn in Berührungskontakt gebracht wird,
wobei die dadurch gebildete Verbundbahn auf der Verbundwalze und/oder danach abgekühlt wird, **dadurch gekennzeichnet, dass** die Nonwoven-Vliesbahn vor der Zuführung zum Auflaufbereich der Verbundwalze auf eine Verbundtemperatur erwärmt wird, die beachtlich niedriger liegt als die Schmelztemperatur des thermoplastifizierten Kunststoffes und die höher ist als die Umgebungstemperatur,
dass die Kunststoff-Folie in dem Bereich, in dem die im plastischen Zustand befindliche Kunststoff-Folie mit der Nonwoven-Vliesbahn in Berührungskontakt kommt, mit Hilfe von zumindest einer Elektronen-Sprühelektrode, die sich quer zur Durchlaufrichtung erstreckt, elektrostatisch aufgeladen wird, und
dass die Temperaturen, die Durchlaufgeschwindigkeit, die Extrusionsgeschwindigkeit der Kunststoff-Folie aus der Breitschlitzdüse und die elektrostatische Aufladung so gewählt werden, dass die Kunststoff-Folie im Bereich des Berührungskontaktes die Kunststoff-Filamente und/oder die Kunststoff-Fasern mit einem Umschlingungswinkel im Bereich von 90° bis 180° oder mehr umschlingt.

2. Verfahren nach Anspruch 1, **dadurch gekennzeichnet, dass** mit einer Nonwoven-Vliesbahn gearbeitet wird, deren Kunststoff-Filamente und/oder Kunstoff-Fasern einem Kunststoff der Gruppe "Polyolefine" oder Mischungen davon angehören.

3. Verfahren nach Anspruch 1 oder 2, **dadurch gekennzeichnet, dass** mit einer Kunststoff-Folie gearbeitet wird, die aus einem Kunststoff der Gruppe "Polyolefine" oder Mischungen davon besteht.

4. Verfahren nach einem der Ansprüche 1 bis 3, **dadurch gekennzeichnet, dass** mit einer Nonwoven-Vliesbahn mit einem Vliesgewicht von 6 bis 25 g/m² und einer Kunststoff-Folie mit einer Foliendicke 3 bis 20 um gearbeitet wird, wobei die Nonwoven-Vliesbahn auf eine Verbundtemperatur von etwa 60 °C und die Verbundwalze auf einer Temperatur von etwa 50 °C gehalten werden.

5. Verfahren nach Anspruch 4, **dadurch gekennzeichnet, dass** mit einer Kunststoff-Vliesbahn aus einem Polypropylen-Kunststoff und einer Kunststoff-Folie aus einem Äthylen-Acrylsäureester Copolymer gearbeitet wird.

6. Verfahren nach einem der Ansprüche 1 bis 5, **dadurch gekennzeichnet, dass** die metallische oder mit metallischer Oberfläche versehene Verbundwalze geerdet wird.

7. Verfahren nach einem der Ansprüche 1 bis 5, **dadurch gekennzeichnet, dass** die metallische oder mit metallischer Oberfläche versehene Verbundwalze gegenüber der Elektronen-Sprühelektrode als Anode geschaltet wird.

8. Verfahren nach einem der Ansprüche 1 bis 5, **dadurch gekennzeichnet, dass** zumindest die Oberfläche der Verbundwalze aus einem dielektrischen Werkstoff besteht.

## Claims

1. A method of continuously producing a composite length comprising a non-woven felt length of plastics filaments and/or plastics fibres made of a thermoplastic plastics material, and comprising a coating on one side made of a plastics film of a thermoplasticised plastics material, wherein the non-woven felt length is fed to the run-on region of a bonding roll which rotates corresponding to the rate of throughput and is at least as wide as the non-woven felt length,
wherein the plastics film is produced, by means of a slit die, the slit orifice of which is disposed in the run-on region of the bonding roll, from a melt of the thermoplastic plastics material, and is brought into contact substantially tangentially, in its virgin, plastic state, with the non-woven felt length resting on the bonding roll,
wherein the composite length which is thereby formed is cooled on the bonding roll and/or thereafter, **characterised in that** before it is fed to the run-on region of the bonding roll the non-woven felt length is heated to a bonding temperature which is considerably lower than the melting temperature of the thermoplasticised plastics material and which is higher than the ambient temperature,
that in the region in which the plastics film, which is in its plastic state, comes into contact with the non-woven felt length, the plastics film is electrostatically charged by means of at least one electron emission electrode which extends transversely to the direction of throughput,
that the temperatures, the rate of throughput, the rate of extrusion of the plastics film from the slit die, and the electrostatic charging are selected so that in the region of contact the plastics film embraces the plastics filaments and/or the plastics fibres at an angle of wrap within the range of 90° to 180° or more.

2. A method according to claim 1, **characterised in that** a non-woven felt length is employed, the plastics filaments and/or plastics fibres of which are a plastics material of the polyolefin group, or mixtures thereof.

3. A method according to claim 1 or 2, **characterised in that** a plastics film is employed which consists of a plastics material of the polyolefin group, or mixtures thereof.

4. A method according to any one of claims 1 to 3, **characterised in that** a non-woven felt length is employed which has a felt weight of 6 to 25 g/m², and a plastics film is employed which has a film thickness of 3 to 20 µm, wherein the non-woven felt length is maintained at a bonding temperature of about 60°C and the bonding roll is maintained at a temperature of about 50°C.

5. A method according to claim 4, **characterised in that** a plastics felt length made of a polypropylene plastics material is employed, and a plastics film made of an ethylene-acrylic acid ester copolymer is employed.

6. A method according to any one of claims 1 to 5, **characterised in that** the bonding roll, which is metallic or which is provided with a metallic surface, is earthed.

7. A method according to any one of claims 1 to 5, **characterised in that** the bonding roll, which is metallic or which is provided with a metallic surface, is connected as an anode in relation to the electron emission electrode.

8. A method according to any one of claims 1 to 5, **characterised in that** at least the surface of the bonding roll consists of a dielectric material.

## Revendications

1. Procédé de fabrication d'une bande composite constituée d'une bande de non-tissé en filaments de matière synthétique et/ou de fibres synthétiques en matière thermoplastique, ainsi que d'un revêtement sur une face constitué d'une feuille plastique en matière thermoplastifiée en continu, la bande de non-tissé étant acheminée vers la zone d'entrée d'un cylindre d'assemblage qui tourne en fonction de la vitesse de passage et qui présente au moins la largeur de la bande de non-tissé,
dans lequel la feuille plastique est produite, à l'aide d'une filière à fente large dont l'embouchure de fente est disposée dans la zone d'entrée du rouleau d'assemblage, à partir d'un bain fondu de la matière thermoplastique, et, à l'état plastique vierge, est amenée en contact, sensiblement tangentiellement, avec la bande de non-tissé reposant sur le cylindre d'assemblage,
dans lequel la bande composite ainsi formée est refroidie sur le cylindre d'assemblage et/ou ensuite, **caractérisé en ce que** la bande de non-tissé est chauffée, avant d'être amenée à la zone d'entrée du cylindre d'assemblage, à une température d'assemblage qui est beaucoup plus basse que la température de fusion de la matière thermoplastifiée et qui est supérieure à la température ambiante,
**en ce que** la feuille plastique est chargée de manière électrostatique dans la zone dans laquelle la feuille plastique, se trouvant à l'état plastique, est en contact physique avec la bande de non-tissé, à l'aide d'au moins une électrode de pulvérisation d'électrons, qui s'étend transversalement à la direction de passage, et
**en ce que** les températures, la vitesse de passage, la vitesse d'extrusion de la feuille plastique de la filière à fente large et la charge électrostatique sont choisies de manière que la feuille plastique entoure, dans la zone du contact physique, les filaments de matière synthétique et/ou les fibres synthétiques avec un angle d'enroulement dans la plage de 90° à 180° ou plus.

2. Procédé selon la revendication 1, **caractérisé en ce qu'**on travaille avec une bande de non-tissé dont les filaments synthétiques et/ou les fibres synthétiques appartiennent à une matière synthétique du groupe "polyoléfines" ou de mélanges de celles-ci.

3. Procédé selon la revendication 1 ou 2, **caractérisé en ce qu'**on travaille avec une feuille plastique qui est constituée d'une matière synthétique du groupe "polyoléfines" ou de mélanges de celles-ci.

4. Procédé selon l'une des revendications 1 à 3, **caractérisé en ce qu'**on travaille avec une bande de non-tissé d'un poids de non-tissé de 6 à 25 g/m² et avec une feuille plastique d'une épaisseur de feuille comprise entre 3 et 20 µm, la bande de non-tissé étant maintenue à une température d'assemblage d'environ 60 °C et le cylindre d'assemblage étant maintenu à une température d'environ 50 °C.

5. Procédé selon la revendication 4, **caractérisé en ce qu'**on travaille avec une bande de non-tissé constituée d'une matière plastique de polypropylène et d'une feuille plastique constituée d'un copolymère éthylène-acrylate.

6. Procédé selon l'une des revendications 1 à 5, **caractérisé en ce que** le cylindre d'assemblage métallique ou pourvu d'une surface métallique est mis à la terre.

7. Procédé selon l'une des revendications 1 à 5, **caractérisé en ce que** le cylindre d'assemblage métallique ou pourvu d'une surface métallique est monté en tant qu'anode par rapport à l'électrode de pulvérisation d'électrons.

8. Procédé selon l'une des revendications 1 à 5, **caractérisé en ce qu'**au moins la surface du cylindre d'assemblage est constituée d'un matériau diélectrique.
